# DEMANDE DE BREVET EUROPEEN

(11) **EP 3 067 125 A1**
(43) Date de publication de la demande: **14.09.2016**
(21) Numéro de dépôt: 16159271.2
(22) Date de dépôt: 08.03.2016
(51) Int. Cl.: B08B 3/12, B08B 7/02, B29B 17/02

(54) **PROCÉDÉ ET INSTALLATION DE NETTOYAGE D'UN SUPPORT PLASTIQUE IMPRIMÉ**

(30) Priorité: 09.03.2015 FR 1551963
(71) Demandeur: Nunes, Licinio Manuel Rodrigues, 3850-002 Albergaria-a-Velha (PT); Ceisa Packaging, 27300 Bernay (FR)
(72) Inventeur: NUNES, Licinio Manuel Rodrigues, 3850-002 ALBERGARIA-A-VELHA (PT); ABITEBOUL, Matthieu, 75001 PARIS (FR)
(74) Mandataire: Cabinet Laurent & Charras

(57) **Abrégé**

Procédé de nettoyage d'un support plastique élastique (1) comprenant au moins une couche d'impression à encre ou résine.

Le procédé comprend au moins les étapes consistant à :
- exercer une contrainte sur le support plastique (1) de manière à l'étirer jusqu'à dépasser la limite d'élasticité de la couche d'impression ;
- immerger le support plastique (1) étiré dans un bain de solution organique (10) comprenant des moyens (13) émettant des ultrasons provoquant l'apparition de bulles d'air dans la solution organique, qui éclatent au contact du support plastique (1) de sorte à entrainer la séparation de la couche d'impression détériorée ou rompue, et du support plastique (1).

## Description

### DOMAINE TECHNIQUE

La présente invention concerne le domaine technique du recyclage de supports plastiques imprimés, par exemple en polyéthylène, polypropylène, polyester ou en toute autre matière plastique, et se présentant par exemple sous la forme d'un amas de supports plastiques présentés en vrac, ou bien sous la forme de films plastiques présentés en bobines.

L'invention concerne plus particulièrement un procédé et des installations de nettoyage d'un support plastique imprimé en vue de son recyclage.

Par nettoyage du support plastique en vue de son recyclage, on entend notamment la suppression de la couche d'encre et/ou de résine imprimée sur ledit support plastique pour faciliter les opérations de recyclage ultérieures.

Une application préférée de l'invention concerne le nettoyage de films plastiques, mais il est bien évident que la présente invention concerne le nettoyage de tout type de support plastique comprenant au moins une couche d'impression à encre ou résine.

### ART ANTERIEUR

Il est connu de l'état de la technique de nettoyer un film plastique imprimé, par une action mécanique par frottement par exemple. Cette technique ne donne pas entière satisfaction, le nettoyage n'est pas optimal et peut détériorer la surface du film plastique. De plus, ce type de nettoyage est relativement lent et n'est pas adapté aux cadences industrielles.

Une autre solution consiste par exemple à effectuer ce nettoyage par une action chimique. Ce type de solution, acceptable en termes d'efficacité, peut être relativement lent, ou à tout le moins couteux à mettre en oeuvre.

### EXPOSE DE L'INVENTION

Ainsi donc, l'invention vise à fournir un procédé et une installation qui permettent de nettoyer d'une manière optimale, rapide, simple et peu onéreuse, un support plastique imprimé, tel qu'un amas de supports plastiques présentés en vrac, ou un film plastique présenté en bobine, pour faciliter les opérations de recyclage ultérieures dudit support plastique. En effet, le procédé de nettoyage du support plastique doit être complet et stable dans le temps pour éviter les problèmes de recyclage ultérieurs si le support comporte des résidus d'encre.

Un autre objectif de l'invention est de garantir un nettoyage optimal du support plastique imprimé.

Un autre objectif de l'invention est de fournir une installation pour le nettoyage d'un film plastique imprimé sur au moins une face, et se présentant sous la forme de bobine.

Un autre objectif de l'invention est de fournir une installation pour le nettoyage d'un amas de supports plastiques imprimés et présentés en vrac.

Afin de résoudre les problèmes précités, il a été mis au point un procédé de nettoyage d'un support plastique comprenant au moins une couche d'impression à encre ou résine, et dont la limite d'élasticité dudit support plastique est supérieure à celle de la couche d'impression, ledit procédé étant remarquable en ce qu'il comprend au moins les étapes consistant :
- à exercer une contrainte sur le support plastique de manière à l'étirer jusqu'à dépasser la limite d'élasticité de la couche d'impression pour la détériorer ou la rompre ;
- à immerger le support plastique étiré dans un bain de solution organique comprenant des moyens émettant des ultrasons provoquant l'apparition de bulles d'air dans la solution organique, qui éclatent au contact du support plastique de sorte à entrainer la séparation de la couche d'impression détériorée ou rompue, et du support plastique.

Le support plastique peut être de tout type, et il est essentiel qu'il comprenne une limite d'élasticité supérieure à celle de la couche d'impression pour que la couche d'impression se déforme plastiquement ou se rompe de manière irréversible, avant le support plastique. Le support plastique peut ainsi être constitué d'un film plastique en polyéthylène, en polypropylène, en polyester ou toute autre matière plastique appropriée.

De cette manière, le fait d'exercer une telle contrainte sur le support plastique permet une dissociation entre le support plastique et la couche d'impression constituée, par exemple, par de l'encre et/ou de la résine nitrocellulose. En d'autres termes, la couche d'impression se détériore et/ou se désagrège et peut donc être facilement séparée du support plastique.

L'éclatement des bulles d'air provoquées par les ultrasons entraine la séparation de la couche d'impression qui est déjà détériorée ou désagrégée. La solution organique favorise la propagation des ultrasons et optimise le nettoyage du support plastique.

Selon une forme de réalisation particulière du procédé selon l'invention, l'étape consistant à exercer une contrainte sur ledit support plastique consiste à le broyer de manière à l'étirer par arrachement et à former une pluralité de copeaux de support plastique dont leur couche d'impression est déformée plastiquement ou rompue.

Ainsi, le procédé selon l'invention permet de nettoyer, et donc de recycler ensuite, un amas de supports plastiques quelconques, imprimés, et disposés en vrac. Les copeaux issus du procédé sont, par exemple, positionnés dans des paniers et plongés dans le bain de solution organique.

Selon une forme de réalisation particulière du procédé selon l'invention, l'étape consistant à exercer une contrainte sur ledit support plastique consiste à le faire défiler entre deux rouleaux mus en rotation à des vitesses différentes pour étirer ledit support plastique. Ainsi, le procédé est facilement adaptable à des supports plastiques imprimés se présentant sous la forme de bobines, tels que des films plastiques par exemple. Le support plastique est ensuite acheminé dans le bain de solution organique, par exemple, par l'intermédiaire de rouleaux de renvoi.

Avantageusement, le procédé adapté aux supports plastiques présentés en bobines comprend une étape supplémentaire de nettoyage mécanique par frottement du support plastique étiré avant son immersion dans le bain de solution organique. De cette manière, une partie de la couche d'impression est retirée préalablement à l'immersion du support plastique dans le bain de solution organique. Cela permet notamment de ralentir, d'une manière significative, la contamination du bain de solution organique par la couche d'impression, et également d'optimiser la suppression de la couche d'impression.

Avantageusement, dans le procédé de nettoyage selon l'invention, le support plastique étiré est immergé dans au moins un autre bain de solution organique comprenant des moyens émettant des ultrasons à une fréquence supérieure à celle des ultrasons émis dans le bain précédent. De cette manière, l'immersion dans plusieurs bains successifs de solution organique permet d'ajuster, d'une manière optimale, la qualité du nettoyage du support plastique, et d'augmenter la vitesse du procédé de nettoyage, en jouant notamment sur la fréquence des ultrasons émis. En effet, plus la fréquence est élevée, plus les bulles générées sont de petites tailles et permettent un nettoyage fin et précis du support plastique. Ainsi, une fréquence basse génère des grosses bulles et permet de faire un premier nettoyage grossier, et une fréquence haute génère des petites bulles et permet de faire un nettoyage de finition.

Selon une forme de réalisation particulière de l'invention, et afin de faciliter le nettoyage par ultrasons, le procédé adapté aux supports plastiques présentés en bobines comprend une étape de nettoyage mécanique par frottement du support plastique étiré, pendant son immersion dans le ou les bains de solution organique.

L'invention concerne également une installation de nettoyage d'un amas de supports plastiques présentés en vrac et comprenant au moins une couche d'impression constituée d'encre ou de résine. Selon l'invention, l'installation comprend :
- des moyens d'acheminement du vrac de supports plastiques vers un broyeur apte à étirer par arrachement lesdits supports plastiques jusqu'à dépasser la limite d'élasticité de la couche d'impression pour la détériorer ou la rompre, et à former une pluralité de copeaux de support plastique dont leur couche d'impression est déformée plastiquement ou rompue ;
- au moins un bain de solution organique comprenant des moyens aptes à émettre des ultrasons de manière à provoquer l'apparition de bulles d'air dans la solution organique qui éclatent au contact du support plastique et qui entrainent la séparation de la couche d'impression déformée ou rompue, et du support plastique, ledit bain étant apte à recevoir en immersion au moins un panier apte à recevoir les copeaux de support plastique.

Par ailleurs, l'invention concerne également une installation de nettoyage d'un support plastique se présentant sous la forme d'une bobine de film plastique, ledit film plastique comprenant au moins une couche d'impression à encre ou résine. Selon l'invention, l'installation comprend :
- des moyens de réception et de déroulage de la bobine,
- des moyens d'étirement du film plastique déroulé, aptes à étirer ledit film plastique jusqu'à dépasser la limite d'élasticité de la couche d'impression pour la détériorer ou la rompre,
- des moyens d'acheminement du film plastique étiré jusque dans un bain de solution organique comprenant des moyens aptes à émettre des ultrasons de manière à provoquer l'apparition de bulles d'air dans la solution organique, qui éclatent au contact du support plastique et qui entrainent la séparation de la couche d'impression déformée plastiquement ou rompue, et du support plastique.

Avantageusement, l'installation comprend des moyens de nettoyage mécanique, tels que des rouleaux à brosses tournant à contre sens par rapport au sens de déroulement du film plastique, agencés entre les moyens d'étirement et le bain de solution organique. Les moyens de nettoyage mécanique sont aptes à frotter la couche d'impression pour la séparer du film plastique.

Des moyens de nettoyage mécanique similaires à brosses peuvent également être agencés dans le bain de solution organique.

De préférence, l'installation comprend au moins un autre bain de solution organique comprenant des moyens aptes à émettre des ultrasons à une fréquence supérieure à celle des ultrasons émis dans le bain précédent.

Selon une forme de réalisation particulière de l'invention, les moyens aptes à émettre des ultrasons sont des transducteurs submersibles à ultrasons.

### BREVE DESCRIPTION DES DESSINS

D'autres caractéristiques et avantages de l'invention ressortiront clairement de la description qui en est réalisée ci-après, à titre indicatif et nullement limitatif, en référence aux figures annexées dans lesquelles :
- la figure 1 est une représentation schématique illustrant une installation de nettoyage d'un film pastique imprimé et présenté en bobine ;
- la figure 2 est une représentation schématique illustrant en perspective l'installation de la figure 1 ;
- la figure 3 est une représentation schématique illustrant une installation de nettoyage d'un amas de supports plastiques imprimés et présentés en vrac.

### EXPOSE DETAILLE DE L'INVENTION

L'invention concerne un procédé de nettoyage d'un support plastique comprenant au moins une couche d'impression constituée d'encre et/ou de résine.

Plus précisément, l'invention concerne une installation de nettoyage d'un film pastique imprimé et présenté en bobine, et une installation de nettoyage d'un amas de supports plastiques imprimés et présentés en vrac.

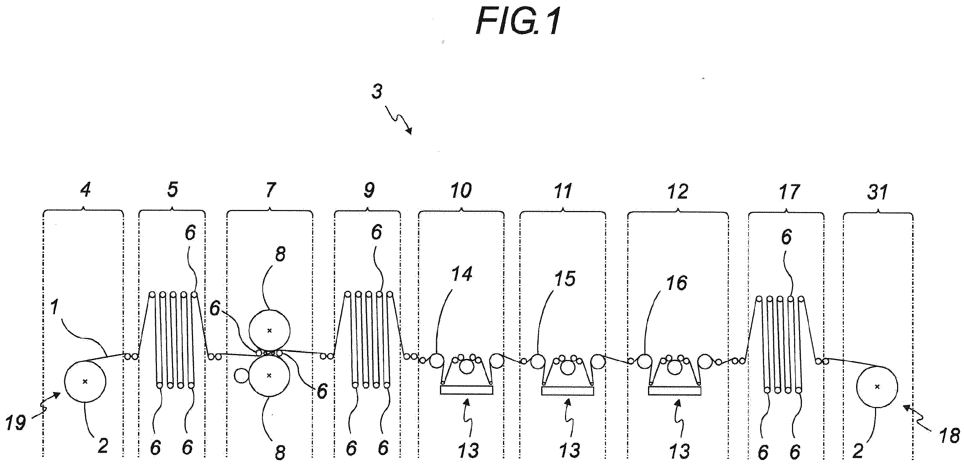

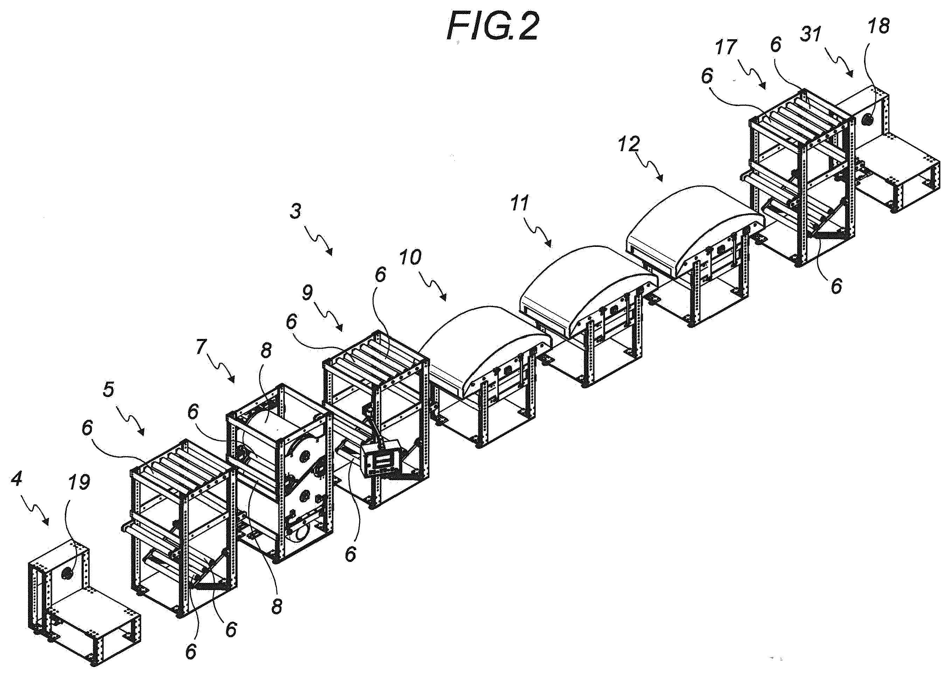

En référence aux figures 1 et 2, qui illustrent une installation (3) permettant le nettoyage d'un film plastique (1) stocké sous la forme d'une bobine (2), ladite installation (3) est composée de neuf modules successifs remplissant chacun une fonction spécifique dans le procédé de nettoyage du film plastique (1) selon l'invention.

L'installation (3) comprend ainsi un premier module (4) de déroulage présentant des moyens (19) de réception et de déroulage de la bobine de film plastique (2). Ces moyens (19) sont bien connus de l'homme du métier et se présentent par exemple sous la forme d'un rouleau dévidoir, libre en rotation, et apte à recevoir en insertion un mandrin de la bobine (2).

Le film déroulé est ensuite acheminé vers un second module (5) comprenant une pluralité de rouleaux de renvoi (6), aptes à renvoyer en « accordéon » le film plastique (1) tout en assurant une tension uniforme dudit film plastique (1). Ces rouleaux de renvoi (6) permettent également de piloter la vitesse de déroulage du module (4).

Le film plastique (1) déroulé est ensuite acheminé dans un troisième module (7), et déroulé entre deux rouleaux opposés (8) formant des moyens d'étirement dudit film plastique (1). A cet effet, les deux rouleaux opposés (8) tournent, en sens inverse l'un par rapport à l'autre, en pressant le film entre eux, ou bien contre d'autres rouleaux de renvoi (6). Ces deux rouleaux (8) sont motorisés et induisent le déroulage dudit film plastique (1). Ces deux rouleaux tournent à des vitesses différentes de manière à étirer le film plastique (1), jusqu'à dépasser la limite d'élasticité de la couche d'impression. L'homme du métier saura bien entendu définir l'étirement nécessaire en fonction du matériau utilisé pour le film plastique et en fonction du type de couche d'impression.

Ainsi, l'étirement du film plastique déforme plastiquement, c'est-à-dire détériore et désagrège la couche d'impression de sorte à faciliter son retrait ultérieur pour nettoyer ledit film plastique (1).

A cet effet, l'installation (3) comprend, toujours dans ce troisième module (7), un rouleau à brosses (non représenté) tournant en contre sens par rapport au sens de défilement du film plastique (1). Ce rouleau à brosses est agencé de sorte à retirer par frottement sur la face imprimée du film plastique étiré (1), une partie de la couche d'impression.

Le film plastique étiré (1) et en partie nettoyé est ensuite acheminé vers un quatrième module (9), identique au second module (5) et comprenant plusieurs rouleaux de renvoi (6) pour maintenir la tension du film.

Le film plastique étiré (1) et en partie nettoyé est ensuite acheminé vers trois modules successifs, à savoir un cinquième (10), un sixième (11) et un septième (12) modules consistant en une succession de trois bains de solution organique comprenant chacun un ou plusieurs transducteurs submersibles à ultrasons (13). Ces transducteurs (13) émettent donc des ultrasons qui provoquent l'apparition d'une grande quantité de bulles d'air qui éclatent au contact du film plastique (1). Ce sont ces éclatements de bulles d'air qui continuent le procédé de nettoyage et qui séparent la couche d'impression détériorée du film plastique (1). La solution organique peut être de tout type approprié et se présente par exemple sous la forme d'un mélange d'alcool, d'acétate d'éthyle et d'éthoxypropanol. A titre d'exemple non limitatif, la solution organique utilisée est composée de 60% d'alcool, de 20% d'acétate d'éthyle, et de 20% d'éthoxypropanol. Selon un autre exemple, la solution organique utilisée est composée à 100% de Méthoxypropanol (éther mono-méthylique du propylène-glycol) ou à 99% de méthoypropanol et à 1% d'eau. Cette dernière formule fonctionne aussi pour le lavage avec l'inconvénient d'être moins agressive mais l'avantage d'être plus lente en évaporation.

L'opération de nettoyage préalable du film plastique (1) par l'intermédiaire des rouleaux à brosses dans le troisième module (7) permet non seulement la récupération d'une partie des couches d'impression, mais également de ralentir d'une manière significative la contamination des bains de nettoyage (10, 11, 12), et également d'optimiser la suppression de la couche d'impression.

Les trois bains successifs (10, 11, 12) comprennent des transducteurs émettant des ultrasons à des fréquences différentes. Notamment, la fréquence augmente d'un bain au bain consécutif. Ainsi, il est possible d'ajuster la qualité de nettoyage du film plastique (1) puisque en jouant sur la fréquence du transducteur, il est possible de contrôler la taille des bulles générées. Une fréquence basse génère des bulles de grande taille, qui sont plus efficaces pour un premier nettoyage grossier du film plastique (1), tandis qu'une fréquence haute génère des bulles plus petites pour un nettoyage de finition.

Afin de faciliter le travail de nettoyage par ultrasons, l'installation (3) comprend, par exemple dans chaque bain, des rouleaux à brosses (non représentés) tournant en contre sens par rapport au sens de défilement du film plastique (1), et agencés de sorte à accélérer par frottement sur la face imprimée du film plastique étiré (1), la séparation de la couche d'impression.

Le quatrième module (9) comprenant les rouleaux de renvoi (6) permet également de piloter des rouleaux motorisés (14, 15, 16) agencés à l'entrée des bains de solution organique (10, 11, 12).

A ce stade du procédé, le nettoyage du film plastique (1) est terminé, de sorte que celui-ci peut être traité de toute manière désirée. Par exemple le film peut être directement acheminé vers une extrudeuse, qui se chargera de transformer le film nettoyé (1) en granulés pour son recyclage, ou bien le film (1) peut être à nouveau enroulé sur une bobine (2).

A cet effet, le film plastique nettoyé (1) est ensuite par exemple acheminé en sortie du dernier bain (12) vers un huitième module (17) similaire aux second (5) et quatrième (9) modules, comprenant une pluralité de rouleaux de renvoi (6) destinés à absorber les variations de comportement du film plastique (1) tout en assurant la tension uniforme du film plastique (1).

Le film plastique nettoyé (1) est donc, par exemple, acheminé vers un neuvième module (31) comprenant un enrouleur (18) ou une extrudeuse (non représentée), en passant préalablement, par exemple, par un module de séchage (non représenté). Le séchage peut être réalisé de toute manière appropriée notamment par compression de rouleaux éponges contre le film (1) ou par ventilation par exemple.

Le huitième module (17) comprenant une pluralité de rouleaux de renvoi (6) permet également de piloter la vitesse de l'enrouleur (18).

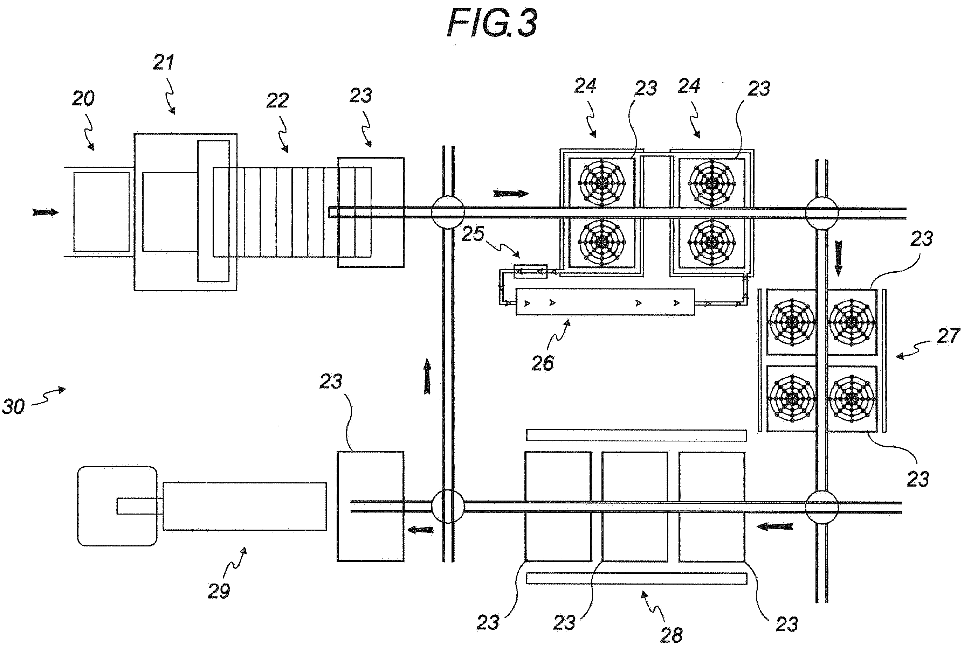

En référence à la figure 3, qui illustre une installation (30) de nettoyage d'un amas de supports plastiques (non représenté) imprimés et présentés en vrac, celle-ci comprend un premier convoyeur (20) agencé pour acheminer le vrac de supports plastiques imprimés vers un broyeur (21).

Le broyeur (21) transforme en copeaux les supports plastiques acheminés. Le processus de broyage permet d'étirer par arrachement lesdits supports plastiques jusqu'à dépasser la limite d'élasticité de la couche d'impression pour la détériorer ou la rompre.

Les copeaux sont ensuite acheminés par l'intermédiaire d'un deuxième convoyeur (22) jusque dans des paniers ajourés (23). Chaque panier ajouré (23) est ensuite acheminé par tout moyen approprié, tels que par des convoyeurs par exemple, jusqu'à être plongé dans plusieurs bains successifs (24) de solution organique en vue du nettoyage des copeaux par ultrasons à des fréquences différentes. Ces étapes de nettoyages sont similaires à celles décrites ci-avant concernant le nettoyage du film plastique. Ces bains (24) de solution organique comprennent avantageusement un filtre (25) et des moyens de distillation (26) pour permettre de filtrer et recycler la solution organique avant de la réinjecter dans lesdits bains (24)

De la même manière que précédemment, les copeaux nettoyés sont traités de toute manière désirée. Par exemple les copeaux nettoyés sont acheminés, dans leur panier (23), vers des moyens de séchage (27) permettent de réaliser un pré-séchage desdits copeaux. Ces moyens de séchage (27) sont de tout type approprié, tels que des moyens de séchage par centrifugation ou par ventilation par exemple. Le séchage par centrifugation permet de séparer, par la force centrifuge, la solution organique des copeaux, et de récupérer ensuite ladite solution organique qui peut être filtrée et recyclée pour être réinjectée dans les bains (24).

Le panier de copeaux pré-séchés est ensuite acheminé dans un tunnel de séchage à air chaud (28) pour finaliser l'opération de séchage, et évacué vers une extrudeuse (29).

Il ressort de ce qui précède que l'invention fournit un procédé et des installations (3, 30) qui permettent de nettoyer d'une manière rapide, simple et peu onéreuse, un support plastique imprimé, tel qu'un film plastique (1) présenté en bobine (2), ou un amas de supports plastiques présentés en vrac, pour faciliter les opérations ultérieures de recyclage.

Le support plastique (1) ainsi nettoyé peut être, après transformation en granulés en sortie d'extrudeuse, introduit directement dans la production de nouveaux rouleaux de film plastique (1), ou de nouveaux éléments plastiques quelconques.

## Revendications

1. Procédé de nettoyage d'un support plastique (1) comprenant au moins une couche d'impression constituée d'encre ou de résine, et dont la limite d'élasticité dudit support plastique (1) est supérieure à celle de la couche d'impression, ***caractérise* en ce qu'**il comprend au moins les étapes consistant à :
- exercer une contrainte sur le support plastique (1) de manière à l'étirer jusqu'à dépasser la limite d'élasticité de la couche d'impression ;
- immerger le support plastique (1) étiré dans un bain de solution organique (10, 24) comprenant des moyens (13) émettant des ultrasons provoquant l'apparition de bulles d'air dans la solution organique, qui éclatent au contact du support plastique (1) de sorte à entrainer la séparation de la couche d'impression détériorée ou rompue, et du support plastique (1).

2. Procédé de nettoyage selon la revendication 1, ***caractérise* en ce que** l'étape consistant à exercer une contrainte sur ledit support plastique consiste à le broyer de manière à l'étirer par arrachement et former une pluralité de copeaux de support plastique dont leur couche d'impression est déformée plastiquement ou rompue.

3. Procédé de nettoyage selon la revendication 1, ***caractérise* en ce que** l'étape consistant à exercer une contrainte sur ledit support plastique consiste à le faire défiler entre deux rouleaux (8) mus en rotation à des vitesses différentes pour étirer ledit support plastique et déformer plastiquement ou rompre la couche d'impression.

4. Procédé de nettoyage selon la revendication 3, ***caractérise* en ce qu'**il comprend une étape de nettoyage mécanique par frottement du support plastique (1) étiré avant l'immersion de ce dernier dans le bain de solution organique (10, 24).

5. Procédé de nettoyage selon l'une quelconque des revendications 1 à 4, ***caractérise* en ce que** le support plastique (1) étiré est immergé dans au moins un autre bain de solution organique (11, 12, 24) comprenant des moyens (13) émettant des ultrasons à une fréquence supérieure à celle des ultrasons émis dans le bain précédent (10, 24).

6. Procédé de nettoyage selon l'une quelconque des revendications 3 à 5, ***caractérise* en ce qu'**il comprend une étape de nettoyage mécanique par frottement du support plastique (1) étiré pendant son immersion dans le ou les bains de solution organique (10, 11, 12, 24).

7. Installation (30) de nettoyage d'un amas de supports plastiques présentés en vrac et comprenant au moins une couche d'impression constituée d'encre ou de résine, et dont la limite d'élasticité des supports plastiques est supérieure à celle de la couche d'impression ***caractérisée* en ce qu'**elle comprend :
- des moyens (20) d'acheminement du vrac de supports plastiques vers un broyeur (21) apte à étirer par arrachement lesdits supports plastiques jusqu'à dépasser la limite d'élasticité de la couche d'impression pour la détériorer ou la rompre, et à former une pluralité de copeaux de support plastique dont leur couche d'impression est déformée plastiquement ou rompue ;
- plusieurs bains successifs (24) de solution organique comprenant chacun des moyens aptes à émettre des ultrasons à des fréquences différentes de manière à provoquer l'apparition de bulles d'air dans la solution organique qui éclatent au contact du support plastique et qui entrainent la séparation de la couche d'impression déformée ou rompue, et du support plastique, chaque bain (24) étant apte à recevoir en immersion au moins un panier (23) apte à recevoir les copeaux de support plastique.

8. Installation (3) de nettoyage d'un support plastique (1) se présentant sous la forme de bobine (2) de film plastique comprenant au moins une couche d'impression constituée d'encre ou de résine et dont la limite d'élasticité dudit film plastique est supérieure à celle de la couche d'impression ***caractérisée* en ce qu'**elle comprend :
- des moyens (19) de réception et de déroulage de la bobine (2),
- des moyens (8) d'étirement du film plastique (1) déroulé, aptes à étirer ledit film plastique jusqu'à dépasser la limite d'élasticité de la couche d'impression pour la détériorer ou la rompre,
- des moyens d'acheminement (6, 14) du film plastique étiré (1) jusque dans un bain de solution organique (10) comprenant des moyens (13) aptes à émettre des ultrasons de manière à provoquer l'apparition de bulles d'air dans la solution organique qui éclatent au contact du support plastique (1) et qui entrainent la séparation de la couche d'impression déformée plastiquement ou rompue, et du support plastique.

9. Installation (3) de nettoyage d'un film plastique selon la revendication 8, ***caractérisée* en ce qu'**elle comprend des moyens de nettoyage mécanique agencés entre les moyens (8) d'étirement et le bain de solution organique (10), lesdits moyens de nettoyage mécanique étant aptes à frotter la couche d'impression pour la séparer du film plastique (1).

10. Installation (3) de nettoyage d'un film plastique selon l'une quelconque des revendications 8 à 9, ***caractérisée* en ce qu'**elle comprend des moyens de nettoyage mécanique agencés dans le bain de solution organique (10), lesdits moyens de nettoyage mécanique étant aptes à frotter la couche d'impression pour la séparer du film plastique (1).

11. Installation (3) de nettoyage d'un film plastique selon l'une quelconque des revendications 8 à 10, ***caractérisée* en ce qu'**elle comprend au moins un autre bain de solution organique (11, 12) comprenant des moyens (13) aptes à émettre des ultrasons à une fréquence supérieure à celle des ultrasons émis dans le bain précédent (10).

12. Installation (3) de nettoyage d'un film plastique selon l'une quelconque des revendications 9 à 11, ***caractérisée* en ce que** les moyens de nettoyage mécanique sont des rouleaux à brosses tournant à contre sens par rapport au déroulage du film plastique (1).
